# EUROPÄISCHE PATENTSCHRIFT

(11) **EP 2 534 353 B1**
(45) Veröffentlichungstag und Bekanntmachung des Hinweises auf die Patenterteilung: **24.07.2019**
(21) Anmeldenummer: 11704409.9
(22) Anmeldetag: 11.02.2011
(51) Int. Cl.: F02D 41/00, F02B 33/40, F02B 37/013, F02B 37/16, F02B 37/18, F02B 39/10

(54) **AUFGELADENE BRENNKRAFTMASCHINE**
CHARGED INTERNAL COMBUSTION ENGINE
MOTEUR À COMBUSTION INTERNE SURALIMENTÉ

(30) Priorität: 11.02.2010 DE 102010007601
(43) Veröffentlichungstag der Anmeldung: 19.12.2012
(73) Patentinhaber: MTU Friedrichshafen GmbH, 88045 Friedrichshafen (DE)
(72) Erfinder: FLOHR, Andreas, 88048 Friedrichshafen (DE)
(74) Vertreter: Kordel, Mattias
(86) Internationale Anmeldenummer: PCT/EP2011/000662
(87) Internationale Veröffentlichungsnummer: WO 2011/098292

(56) Entgegenhaltungen:
- WO-A1-2007/083131
- WO-A2-2009/087274
- JP-A- 55 109 727
- US-A- 6 112 523
- US-A1- 2007 151 243
- US-A1- 2008 169 246

## Beschreibung

Die Erfindung betrifft ein Steuerungs- und Regelungsverfahren für eine aufgeladene Brennkraftmaschine, bei dem in einem Hochleistungsbereich die Ladeluft über eine zweistufige Aufladung aus Niederdruckstufe sowie Hochdruckstufe vorverdichtet der Brennkraftmaschine zugeführt wird und bei dem in einem Niederleistungsbereich die über die zweistufige Aufladung vorverdichtete Ladeluft über einen Kompressor als dritte Aufladestufe nachverdichtet der Brennkraftmaschine zugeführt wird. Ferner betrifft die Erfindung eine entsprechend angepasste Aufladegruppe.

Aus der DE 199 05 112 A1 ist eine Brennkraftmaschine mit einem Abgasturbolader bekannt, bei der zur Verbesserung des Ansprechverhaltens die vorverdichtete Ladeluft über einen Kompressor, zum Beispiel einen Rootsverdichter, nachverdichtet wird. Parallel zum Kompressor ist ein Bypassventil angeordnet, welches bei niedrigen Motordrehzahlen geschlossen wird und bei genügender Leistung des Abgasturboladers geöffnet wird. Systembedingt ist mit dieser Aufladung nur eine geringe Motorleistung darstellbar, die zum Beispiel bei einem Kettenfahrzeug nicht ausreichend ist. Bei einer am Nennleistungspunkt der Brennkraftmaschine ausgelegten einstufigen Aufladung tritt zudem das Problem auf, dass die Drehzahl des Abgasturboladers mit zunehmender geodätischer Höhe aufgrund physikalischer Zusammenhänge ansteigt. Daher muss bei großer geodätischer Höhe die Leistung der Brennkraftmaschine stark reduziert werden, wie dies zum Beispiel die DE 10 2006 008 356 A1 vorschlägt. Dass bei einer geringeren geodätischen Höhe die einstufige Aufladung auf einen niederen Ladedruck eingestellt wird, ist andererseits hinsichtlich der Motorleistung nicht erwünscht. Ein weiteres Beispiel des Standes der Technik ist im Dokument WO2007/083131 A1 offenbart.

Der Erfindung liegt daher Aufgabe zugrunde, eine aufgeladene Brennkraftmaschine zu entwerfen, welche unabhängig von der geodätischen Höhe eine hohe Motorleistung bereitstellt.

Gelöst wird diese Aufgabe durch ein Steuerungs- und Regelungsverfahren mit den Merkmalen von Anspruch 1 und einer entsprechend angepassten Aufladegruppe mit den Merkmalen von Anspruch 4. In den Unteransprüchen sind die Ausgestaltungen dargestellt.

Beim erfindungsgemäßen Steuerungs- und Regelungsverfahren wird in einem Hochleistungsbereich die Ladeluft über eine zweistufige Aufladung aus Niederdruckstufe und Hochdruckstufe vorverdichtet der Brennkraftmaschine zugeführt. In einem Niederleistungsbereich wird die über die zweistufige Aufladung vorverdichtete Ladeluft über einen Kompressor als dritte Aufladestufe nachverdichtet der Brennkraftmaschine zugeführt. Hierbei wird im Niederleistungsbereich der Ladedruck geregelt, indem eine Regelabweichung aus Soll-Ladedruck sowie Ist-Ladedruck berechnet wird, ein Turbinen-Bypassventil zur Umgehung der Hochdruckturbine geschlossen wird und ein Kompressor-Bypassventil zur Umgehung des Kompressors in Abhängigkeit der Regelabweichung angesteuert wird. Im Niederleistungsbereich erfolgt also eine geregelte 3-stufige Aufladung. Im Hochleistungsbereich wird der Ladedruck geregelt, indem das Kompressor-Bypassventil geöffnet wird und das Turbinen-Bypassventil zur Umgehung der Hochdruckturbine in Abhängigkeit der Regelabweichung angesteuert wird. Dies entspricht einer 2-stufig geregelten Aufladung. Definiert wird der Niederleistungsbereich über die Leerlaufdrehzahl der Brennkraftmaschine sowie eine Grenzdrehzahl des Kompressors, während der Hochleistungsbereich über die Grenzdrehzahl sowie eine Maximaldrehzahl der Brennkraftmaschine definiert wird.

Bei der 2-stufig geregelten Aufladung werden die Abgasturbolader der Niederdruckstufe und der Hochdruckstufe in der Art ausgelegt, dass bei Nennleistung beide Stufen aktiv am Ladedruckaufbau beteiligt sind. Die Auslastung der Komponenten und das Drehzahlniveau sinken stark ab, wodurch die Darstellbarkeit sehr hoher Motorleistungen auch in großen geodätischen Höhen ohne Leistungsreduktion möglich wird. Die Auslegung der Abgasturbolader der Niederdruckstufe und der Hochdruckstufe in der zuvor beschriebenen Art bewirkt, dass das verfügbare Drehmoment bei niedrigen Drehzahlen deutlich reduziert ist. Hier wird nun der Kompressor als dritte in Reihe geschaltete Aufladestufe aktiviert, wodurch die Leistungsreduktion aufgehoben wird. Von Vorteil ist neben einer hohen Spitzenleistung sowie einem hohen Mitteldruck, dass schon bei niedrigen Motordrehzahlen ein schneller Ladedruckaufbau erfolgt und eben die Leistungsreduktion bei zunehmender geodätischer Höhe entfällt.

In den Figuren ist ein bevorzugtes Ausführungsbeispiel dargestellt. Es zeigen:
- Figur 1: ein Systemschaubild,
- Figur 2: ein Motorkennfeld,
- Figur 3: einen Regelkreis und
- Figur 4: einen Programm-Ablaufplan.

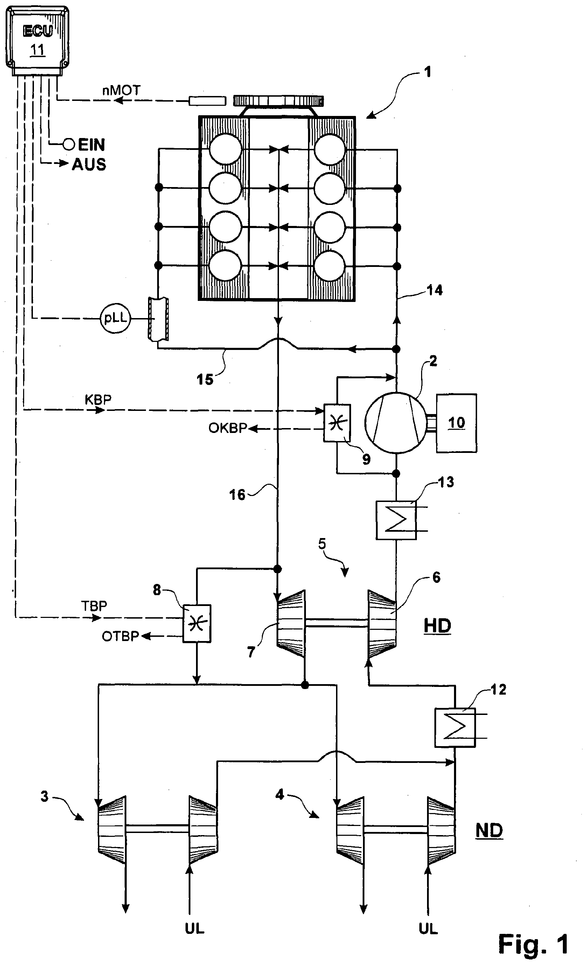

Die Figur 1 zeigt ein Systemschaubild einer Brennkraftmaschine 1 mit einer Aufladegruppe. Die Aufladegruppe umfasst eine Niederdruckstufe ND, eine Hochdruckstufe HD und einen Kompressor 2. Die Niederdruckstufe ND entspricht einer ersten Aufladestufe. Die Hochdruckstufe HD entspricht einer zweiten und der Kompressor 2 entspricht dann einer dritten Aufladestufe. Die Niederdruckstufe ND umfasst zumindest einen Abgasturbolader. Im dargestellten Ausführungsbeispiel umfasst die Niederdruckstufe ND einen ersten Abgasturbolader 3 und einen zweiten Abgasturbolader 4, während die Hochdruckstufe HD nur einen Abgasturbolader 5 aufweist. Jeder Abgasturbolader besteht aus einem Verdichter zur Förderung von Ladeluft und einer von Abgas beaufschlagten Turbine, zum Beispiel der Verdichter 6 und die Hochdruckturbine 7 der Hochdruckstufe HD. Parallel zur Hochdruckturbine 7 der Hochdruckstufe HD ist ein elektrisch ansteuerbares Turbinen-Bypassventil 8 angeordnet. Parallel bedeutet, dass ein Abgasteilstrom die Hochdruckturbine 7 und ein Abgasteilstrom das Turbinen-Bypassventil 8 durchströmen können. Zum Kompressor 2 ist ein elektrisch ansteuerbares Kompressor-Bypassventil 9 parallel angeordnet. Angetrieben wird der Kompressor 2 mittels eines Getriebes 10, zum Beispiel einer Zahnradstufe mit Kupplung, von der Brennkraftmaschine 1.

Gesteuert wird die Brennkraftmaschine 1 und die Aufladegruppe über ein Motorsteuergerät 11 (ECU), welches die üblichen Bestandteile eines Mikrocomputersystems, beispielsweise einen Mikroprozessor, I/O-Bausteine, Puffer und Speicherbausteine (EEPROM, RAM) beinhaltet. In den Speicherbausteinen sind die für den Betrieb der Brennkraftmaschine 1 und der Aufladegruppe relevanten Betriebsdaten in Kennfeldern/Kennlinien appliziert. Über diese berechnet das Steuergerät 11 aus den Eingangsgrößen die Ausgangsgrößen. In der Figur 1 sind als Eingangsgrößen des Motorsteuergeräts 11 exemplarisch die Motordrehzahl nMOT, der Ladedruck pLL und eine Größe EIN dargestellt. Die Größe EIN steht stellvertretend für die weiteren Eingangssignale, beispielsweise für die Öl- oder die Kraftstofftemperatur. Ein Öffnungsgrad OKBP des Kompressor-Bypassventils 9 und ein Öffnungsgrad OTBP des Turbinen-Bypassventils 8 sind optionale Eingangsgröße des Motorsteuergeräts 11, wenn die beiden Bypassventile überwacht werden sollen. Die dargestellten Ausgangsgrößen des elektronischen Motorsteuergeräts 11 sind ein Signal KBP zur Ansteuerung des Kompressor-Bypassventils 9, ein Signal TBP zur Ansteuerung des Turbinen-Bypassventils 8 und ein Signal AUS. Das Signal AUS steht stellvertretend für die weiteren Stellsignale zur Steuerung und Regelung der Brennkraftmaschine 1, beispielsweise den Spritzbeginn/Spritzdauer der Injektoren oder ein Signal zur Ansteuerung einer Saugdrossel bei einem Common-Railsystem.

Über die Niederdruckstufe ND wird die Umgebungsluft UL in der ersten Aufladestufe auf ein erstes Druckniveau verdichtet, zum Beispiel im Bereich von 1,8-2,9 bar. Diese Ladeluft durchströmt dann einen ersten Ladeluftkühler 12 und wird in der Hochdruckstufe HD auf ein zweites Druckniveau verdichtet, zum Beispiel im Bereich von 3-4 bar. Danach wird die Ladeluft in einem zweiten Ladeluftkühler 13 nochmals gekühlt. Bei geschlossenem Kompressor-Bypassventil 9 wird die Ladeluft dann in der dritten Aufladestufe mittels des Kompressors 2 verdichtet (pLL>4 bar) und über die beiden Ladeluftleitungen 14, 15 der Brennkraftmaschine 1 zugeführt. Nach dem Verbrennungsprozess wird das Abgas aus den Zylindern der Brennkraftmaschine 1 über eine Abgasleitung 16 der Hochdruckturbine 7 der Hochdruckstufe HD zugeführt. Bei geschlossenem Turbinen-Bypassventil 8 durchströmt der gesamte Abgasvolumenstrom die Hochdruckturbine 7. Danach wird das entspannte Abgas parallel auf die beiden Turbinen der Niederdruckstufe ND geführt.

Die Erfindung sieht nun vor, dass in einem Niederleistungsbereich die Ladeluft über die Niederdruckstufe ND sowie die Hochdruckstufe HD vorverdichtet wird und die vorverdichtete Ladeluft anschließend über den Kompressor 2 als dritte Aufladestufe nachverdichtet wird. Dies entspricht einer 3-stufigen Aufladung. Im Niederleistungsbereich wird der Ladedruck pLL geregelt wird, indem eine Regelabweichung aus Soll-Ladedruck sowie Ist-Ladedruck berechnet wird, das Turbinen-Bypassventil 8 zur Umgehung der Hochdruckturbine 7 vollständig geschlossen wird und das Kompressor-Bypassventil 9 in Abhängigkeit der Regelabweichung angesteuert wird.

In einem Hochleistungsbereich wird der Ladedruck pLL geregelt wird, indem das Kompressor-Bypassventil 9 vollständig geöffnet wird und das Turbinen-Bypassventil 8 zur Umgehung der Hochdruckturbine 7 in Abhängigkeit der Regelabweichung angesteuert wird. Dies entspricht einer 2-stufig geregelten Aufladung.

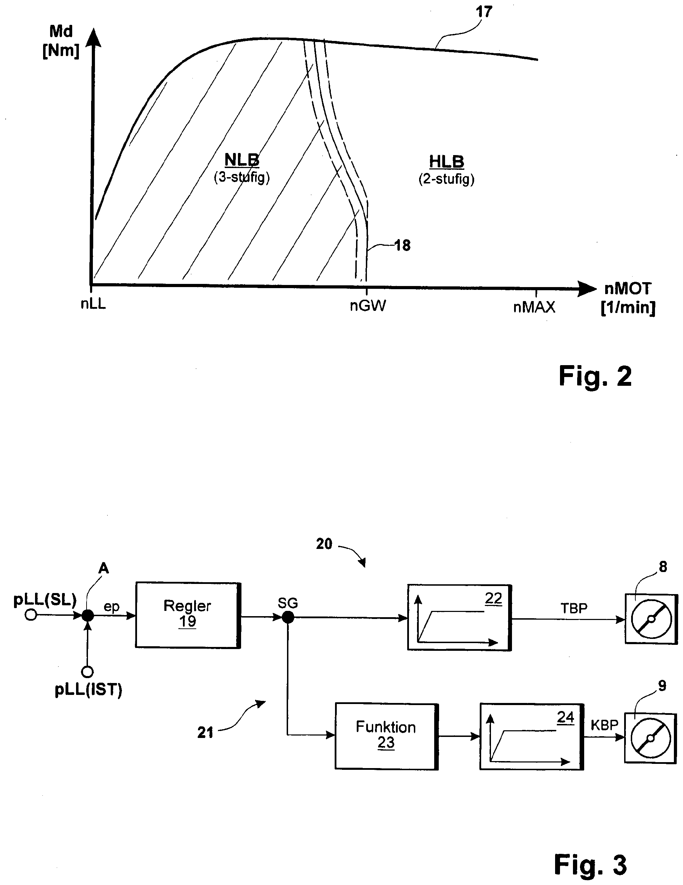

Die Figur 2 zeigt ein Motorkennfeld mit der Motordrehzahl nMOT auf der Abszisse und dem Motormoment Md auf der Ordinate. Begrenzt wird das Motormoment Md über eine DBR-Kurve 17, welche den maximal zulässigen Mitteldruck der Brennkraftmaschine 1 kennzeichnet. Im Motorkennfeld ist der Niederleistungsbereich NLB schraffiert eingezeichnet. Im Niederleistungsbereich NLB ist die 3-stufige Aufladung aus Niederdruckstufe, Hochdruckstufe und Kompressor aktiviert. Der Niederleistungsbereich NLB beginnt bei der Leerlaufdrehzahl nLL der Brennkraftmaschine 1, typischerweise nLL=700 1/min, und endet bei einer Grenzdrehzahl nGW, zum Beispiel nGW=2500 1/min. Die Grenzdrehzahl nGW ergibt sich aus der maximal zulässigen Drehzahl des Kompressors, also dessen Grenzdrehzahl, und dem Übersetzungsverhältnis des Getriebes. Im Niederleistungsbereich ist das Turbinen-Bypassventil vollständig geschlossen, während das Kompressor-Bypassventil in Abhängigkeit der Regelabweichung des Ladedrucks geregelt wird. Oberhalb einer Umschaltkennlinie 18, also in Richtung einer zunehmenden Motordrehzahl nMOT, beginnt der Hochleistungsbereich HLB. Der Hochleistungsbereich HLB erstreckt sich bis zu einer maximalen Motordrehzahl nMAX. Im Hochleistungsbereich HLB ist die 2-stufige Aufladung aus Niederdruck- und Hochdruckstufe aktiv. Der Kompressor als dritte Aufladestufe ist inaktiv, da das Kompressor-Bypassventil vollständig geöffnet ist. Im Hochleistungsbereich HLB wird der Ladedruck über das Turbinen-Bypassventil in Abhängigkeit der Regelabweichung des Ladedrucks geregelt. In einer Option ist vorgesehen, dass die Umschaltkennlinie 18 von einem Toleranzband umgeben ist, um auf geänderte Umgebungsbedingungen reagieren zu können. In der Figur ist das Toleranzband gestrichelt eingezeichnet.

Die Figur 3 zeigt einen Regelkreis zur Regelung Ladedrucks pLL. Die Eingangsgröße, also die Führungsgröße, ist der Soll-Ladedruck pLL(SL). Die Ausgangsgröße des Regelkreises sind die Rohwerte des Ladedrucks pLL. Dieser wird in der Ladeluftleitung (Fig. 1: 15) über einen Sensor erfasst, über ein Softwarefilter gefiltert und als Ist-Ladedruck pLL(IST) gesetzt. An einem Summationspunkt A wird dann aus der Soll-Ist-Abweichung des Ladedrucks die Regelabweichung ep berechnet. Aus der Regelabweichung ep bestimmt ein Ladedruckregler 19 mit zumindest PI-Verhalten die Stellgröße SG. Die Stellgröße SG wird über einen ersten Signalpfad 20 einer Begrenzung 22 und über einen zweiten Signalpfad 21 einem Funktionsblock 23 zugeführt. Über den ersten Signalpfad 20 wird die Stellgröße SG begrenzt und das Turbinen-Bypassventil 8 angesteuert, Ansteuersignal TBP. Über den zweiten Signalpfad 21 wird die Stellgröße SG im Funktionsblock 23 weiterverarbeitet, über die Begrenzung 24 limitiert und das Kompressor-Bypassventil 9 angesteuert, Ansteuersignal KBP. Über den Funktionsblock 23 wird bewirkt, dass der Ladedruckregler 19 nur dann Zugriff auf das Kompressor-Bypassventil 9 hat, wenn das das Turbinen-Bypassventil 8 vollständig geschlossen ist. Wie aus der Darstellung der Figur 3 deutlich ersichtlich ist, kann die Regelung des Ladedrucks bei der 3-stufigen Aufladung in den bestehenden Ladedruck-Regelkreis integriert werden. Von Vorteil ist daher die einfache Implementierung in die Motorsoftware.

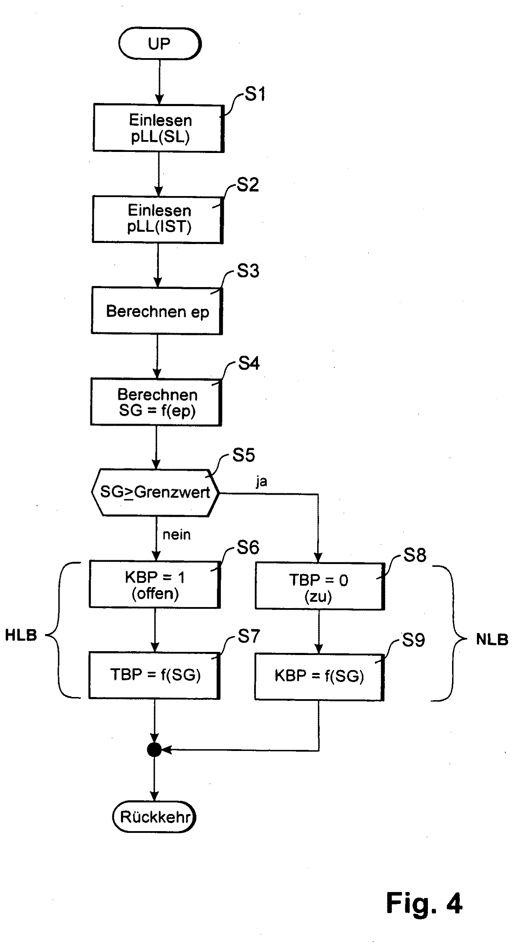

Die Figur 4 zeigt einen Programm-Ablaufplan des Verfahrens als Unterprogramm UP. Bei S1 wird der Soll-Ladedruck pLL(SL) eingelesen, welcher üblicherweise über ein Kennlinie/Kennfeld zumindest in Abhängigkeit eines Leistungswunschs berechnet wird. Danach wird bei S2 der Ist-Ladedruck pLL(IST) aus den Rohwerten berechnet und bei S3 mit dem Soll-Ladedruck pLL(SL) verglichen. Dies entspricht der Regelabweichung ep. Anhand der Regelabweichung ep bestimmt der Ladedruckregler seine Stellgröße SG bei S4. Im Anschluss daran wird geprüft, ob die Stellgröße SG größer/gleich als ein Grenzwert ist, zum Beispiel 90 Grad Öffnungswinkel. Ist die Stellgröße SG kleiner als der Grenzwert, Abfrageergebnis S5: nein, so wird bei S6 die dritte Aufladestufe mit dem Kompressor deaktiviert, indem das Kompressor-Bypassventil über das Ansteuersignal KBP vollständig geöffnet wird. Die vorverdichtete Ladeluft wird nunmehr nach der Hochdruckstufe unter Umgehung des Kompressors unmittelbar der Brennkraftmaschine zugeleitet. Bei S7 wird dann das Turbinen-Bypassventil über das Ansteuersignal TBP in Abhängigkeit der Regelabweichung ep geregelt. Dies entspricht dem Hochleistungsbereich HLB mit einer 2-stufig geregelten Aufladung. Danach ist dieser Programmpfad beendet und es wird ins Hauptprogramm zurückgekehrt.

Wurde bei S5 hingegen festgestellt, dass die Stellgröße SG größer/gleich als der Grenzwert ist, Abfrageergebnis S5: ja, so wird bei S8 das Turbinen-Bypassventil über das Ansteuersignal TBP vollständig geschlossen und bei S9 das Kompressor-Bypassventil über das Ansteuersignal KBP in Abhängigkeit der Regelabweichung ep geregelt. Dies entspricht dem Niederleistungsbereich NLB mit 3-stufig geregelter Aufladung. Danach wird ins Hauptprogramm zurückgekehrt.

Die Erfindung kann in folgenden Punkten variiert werden, ohne das Wesen der Erfindung zu verändern:
- Der Kompressor kann anstelle von der Brennkraftmaschine auch von einem Elektromotor angetrieben werden. Die Förderleistung des Kompressors und damit das Druckniveau der Ladeluft pLL wird dann über die Drehzahl des Elektromotors festgelegt. Das Kompressor-Bypassventil 9 erfüllt dann nur noch eine Bypassfunktion im Hochleistungsbereich. Angesteuert wird der Elektromotor vom Motorsteuergerät über ein PWM-Signal;
- Der Kompressor kann teil eines Abgasturboladers sein, das heißt, der mechanische oder elektrische Antrieb des Kompressors entfällt;
- Anstelle des Druckniveaus der Ladeluft pLL kann als Regelgröße die Luftmasse oder das Verbrennungsluftverhältnis verwendet werden, wobei dann die Luftmasse an der gleichen Stelle wie das Druckniveau der Ladeluft pLL detektiert und das Verbrennungsluftverhältnis stromab der Turbine der Niederdruckstufe gemessen wird;
- Die Ansteuerung der beiden Bypassventile kann über pneumatische Steuerdrücke erfolgen.

### Bezugszeichen

- 1: Brennkraftmaschine
- 2: Kompressor
- 3: erster Abgasturbolader (Niederdruckstufe ND)
- 4: zweiter Abgasturbolader (Niederdruckstufe ND)
- 5: Abgasturbolader Hochdruckstufe (HD)
- 6: Verdichter
- 7: Hochdruckturbine
- 8: Turbinen-Bypassventil
- 9: Kompressor-Bypassventil
- 10: Getriebe
- 11: Motorsteuergerät
- 12: erster Ladeluftkühler
- 13: zweiter Ladeluftkühler
- 14: Ladeluftleitung
- 15: Ladeluftleitung
- 16: Abgasleitung
- 17: DBR-Kurve
- 18: Umschaltkennlinie
- 19: Ladedruckregler
- 20: erster Signalpfad
- 21: zweiter Signalpfad
- 22: Begrenzung
- 23: Funktionsblock
- 24: Begrenzung

## Patentansprüche

1. Steuerungs- und Regelungsverfahren für eine aufgeladene Brennkraftmaschine (1), bei dem in einem Hochleistungsbereich (HLB) die Ladeluft über eine zweistufige Aufladung aus Niederdruckstufe (ND) sowie Hochdruckstufe (HD) durch Abgasturbolader (3,4,5), mit jeweils einem Verdichter (6) zur Förderung von Ladeluft und einer von Abgas beaufschlagten Turbine, vorverdichtet der Brennkraftmaschine (1) zugeführt wird und bei dem in einem Niederleistungsbereich (NLB) die über die zweistufige Aufladung vorverdichtete Ladeluft über einen Kompressor (2) als dritte Aufladestufe nachverdichtet der Brennkraftmaschine (1) zugeführt wird, wobei im Niederleistungsbereich (NLB) der Ladedruck (pLL) geregelt wird, indem eine Regelabweichung (ep) aus Soll-Ladedruck (pLL(SL)) sowie Ist-Ladedruck (pLL(IST)) berechnet wird, ein Turbinen-Bypassventil (8) zur Umgehung der Hochdruckturbine (7) geschlossen wird und ein Kompressor-Bypassventil (9) zur Umgehung des Kompressors (2) in Abhängigkeit der Regelabweichung (ep) angesteuert wird, und wobei im Hochleistungsbereich (HLB) der Ladedruck (pLL) geregelt wird, indem das Kompressor-Bypassventil (9) geöffnet wird und das Turbinen-Bypassventil (8) zur Umgehung der Hochdruckturbine (7) in Abhängigkeit der Regelabweichung (ep) angesteuert wird.

2. Verfahren nach Anspruch 1,
**dadurch gekennzeichnet,**
**dass** der Niederleistungsbereich (NLB) über die Leerlaufdrehzahl (nLL) der Brennkraftmaschine (1) sowie eine Grenzdrehzahl des Kompressors (2) definiert wird und der Hochleistungsbereich (HLB) über die Grenzdrehzahl sowie eine Maximaldrehzahl (nMAX) der Brennkraftmaschine (1) definiert wird.

3. Verfahren nach einem der vorausgegangenen Ansprüche,
**dadurch gekennzeichnet,**
**dass** der Öffnungsgrad (OTBP) des Turbinen-Bypassventils (8) und der Öffnungsgrad (OKBP) des Kompressor-Bypassventils (9) als rückgemeldete Größen von einem elektronischen Motorsteuergerät (11) überwacht werden.

4. Aufladegruppe zur Ausführung des Verfahrens gemäß Anspruch 1,
**dadurch gekennzeichnet,**
**dass** parallel zum Kompressor (2) ein Kompressor-Bypassventil (9) zur Umgehung des Kompressors (2) angeordnet ist und parallel zur Hochdruckturbine (7) ein Turbinen-Bypassventil (8) zur Umgehung der Hochdruckturbine (7) angeordnet ist, wobei
im Niederleistungsbereich (NLB) das Turbinen-Bypassventil (8) geschlossen ist und die Regelabweichung (ep) des Ladedrucks den Öffnungsgrad des Kompressor-Bypassventils (9) festlegt, und wobei
im Hochleistungsbereich (HLB) das Kompressor-Bypassventil (9) vollständig geöffnet ist und die Regelabweichung (ep) des Ladedrucks den Öffnungsgrad des Turbinen-Bypassventils (8) festlegt.

## Claims

1. Open-loop and closed-loop control method for a supercharged internal combustion engine (1), in which in a high-performance range (HLB) the charge air is fed in a pre-compressed state to the internal combustion engine (1), via a two-stage supercharging process composed of a low-pressure stage (ND) and a high-pressure stage (HD), by means of exhaust-gas turbochargers (3, 4, 5), each with a compressor (6) for conveying charge air and a turbine to which exhaust gas is applied, and in which in a low-performance range (NLB) the charge air which is pre-compressed by means of the two-stage supercharging process is fed to the internal combustion engine (1) after having been post-compressed by means of a compressor (2) as a third supercharging stage, wherein in the low-performance range (NLB) the charge pressure (pLL) is closed-loop controlled by calculating a control error (ep) composed of the setpoint charge pressure (pLL(SL)) and the actual charge pressure (pLL(IST)), a turbine bypass valve (8) for bypassing the high-pressure turbine (7) is closed, and a compressor bypass valve (9) for bypassing the compressor (2) is actuated as a function of the control error (ep), and wherein the charge pressure (pLL) is closed-loop controlled in the high-performance range (HLB) by opening the compressor bypass valve (9), and the turbine bypass valve (8) is actuated in order to bypass the high-pressure turbine (7) as a function of the control error (ep).

2. Method according to Claim 1,
**characterized**
**in that** the low-performance range (NLB) is defined by means of the idling rotational speed (nLL) of the internal combustion engine (1) and a limiting rotational speed of the compressor (2), and the high-performance range (HLB) is defined by means of the limiting rotational speed and a maximum rotational speed (nMAX) of the internal combustion engine (1).

3. Method according to one of the preceding claims,
**characterized**
**in that** the degree of opening (OTBP) of the turbine bypass valve (8), and the degree of opening (OKBP) of the compressor bypass valve (9) are monitored as fed-back variables by an electronic engine control device (11).

4. Supercharging group for carrying out the method according to Claim 1,
**characterized**
**in that** a compressor bypass valve (9) for bypassing the compressor (2) is arranged parallel to the compressor (2), and a turbine bypass valve (8) for bypassing the high-pressure turbine (7) is arranged parallel to the high-pressure turbine (7),
wherein
in the low-performance range (NLB) the turbine bypass valve (8) is closed and the control error (ep) of the charge pressure defines the degree of opening of the compressor bypass valve (9), and wherein
in the high-performance range (HLB) the compressor bypass valve (9) is completely opened and the control error (ep) of the charge pressure defines the degree of opening of the turbine bypass valve (8).

## Revendications

1. Procédé de commande et de régulation pour un moteur à combustion interne (1) suralimenté, avec lequel, dans une plage de haute puissance (HLB), l'air de charge est acheminé au moteur à combustion interne (1) en étant précompressé par le biais d'une suralimentation à deux étages constituée d'un étage à basse pression (ND) ainsi que d'un étage à haute pression (HD), par des turbocompresseurs de gaz d'échappement (3, 4, 5) comprenant respectivement un compresseur (6) destiné au transport de l'air de charge et une turbine sollicitée par les gaz d'échappement, et avec lequel, dans une plage de basse puissance (NLB), l'air de charge précompressé par le biais de la suralimentation à deux étages est acheminé au moteur à combustion interne (1) en étant recompressé par le biais d'un compresseur (2) faisant office de troisième étage de suralimentation, la pression de charge (pLL) étant régulée dans la plage de basse puissance (NLB) en calculant une erreur de régulation (ep) entre la pression de charge de consigne (pLL(SL)) et la pression de charge réelle (pLL(IST)), en fermant une vanne de contournement de turbine (8) servant à contourner la turbine à haute pression (7) et en excitant une vanne de contournement de compresseur (9) servant à contourner le compresseur (2) en fonction de l'erreur de régulation (ep), la pression de charge (pLL) étant régulée dans la plage de haute puissance (HLB) en ouvrant la vanne de contournement de compresseur (9) et en excitant la vanne de contournement de turbine (8) pour contourner la turbine à haute pression (7) en fonction de l'erreur de régulation (ep).

2. Procédé selon la revendication 1, **caractérisé en ce que** la plage de basse puissance (NLB) est définie par le biais du régime de ralenti (nLL) du moteur à combustion interne (1) ainsi qu'une vitesse de rotation limite du compresseur (2) et la plage de haute puissance (HLB) est définie par le biais de la vitesse de rotation limite ainsi qu'une vitesse de rotation maximale (nMAX) du moteur à combustion interne (1).

3. Procédé selon l'une des revendications précédentes, **caractérisé en ce que** le degré d'ouverture (OTBP) de la vanne de contournement de turbine (8) et le degré d'ouverture (OKBP) de la vanne de contournement de compresseur (9) sont surveillées en tant que grandeurs de rétroaction par un contrôleur de moteur électronique (11).

4. Groupe de suralimentation destiné à mettre en oeuvre le procédé selon la revendication 1, **caractérisé en ce qu'**une vanne de contournement de compresseur (9) servant à contourner le compresseur (2) est disposée parallèlement au compresseur (2) et une vanne de contournement de turbine (8) servant à contourner la turbine à haute pression (7) est disposée parallèlement à la turbine à haute pression (7),
dans la plage de basse puissance (NLB), la vanne de contournement de turbine (8) étant fermée et l'erreur de régulation (ep) de la pression de charge fixant le degré d'ouverture de la vanne de contournement de compresseur (9) et
dans la plage de haute puissance (HLB), la vanne de contournement de compresseur (9) étant complètement ouverte et l'erreur de régulation (ep) de la pression de charge fixant le degré d'ouverture de la vanne de contournement de turbine (8).
